# EUROPEAN PATENT APPLICATION

(11) **EP 1 683 430 A1**
(43) Date of publication of application: **26.07.2006**
(21) Application number: 04818510.2
(22) Date of filing: 12.11.2004
(51) Int. Cl.: A23L 3/365, F24C 7/02

(54) **DEFROSTING METHOD**

(30) Priority: 13.11.2003 JP 2003383421
(71) Applicant: MATSUSHITA ELECTRIC INDUSTRIAL CO., LTD., Kadoma-shi, Osaka 571-8501 (JP)
(72) Inventor: AKASHI, Hideko Matsushita Electric Ind. Co., Ltd., Chuo-ku, Osaka-shi, Osaka 540-6319 (JP); INADA, Ikuhiro Matsushita Electric Ind. Co., Ltd., Chuo-ku, Osaka-shi, Osaka 540-6319 (JP); MATSUDA, Masato Matsushita Electric Ind. Co., Ltd., Chuo-ku, Osaka-shi, Osaka 540-6319 (JP)
(74) Representative: Grünecker, Kinkeldey, Stockmair & Schwanhäusser Anwaltssozietät
(86) International application number: PCT/JP2004/016845
(87) International publication number: WO 2005/046362

(57) **Abstract**

To provide a thawing method wherein a frozen commodity can be thawed, in a short time, from the inside with no unevenness.

The thawing method, which thaws a frozen commodity by high frequency heating, includes: a first high frequency heating step in which the frozen commodity is high frequency heated to the vicinity of a melting temperature; a temperature detection step which measures the temperature of the frozen commodity during the first high frequency heating step and detects that the measured temperature has reached the melting temperature; a steam supplying step which starts a steam supply when the melting temperature is detected in the temperature detection step, thus forming a film of dew condensation on the surface of the frozen commodity; and a second high frequency heating step in which the frozen commodity is high frequency heated after the start of the steam supplying step.

## Description

### Technical Field

The present invention relates to a thawing method which thaws a frozen commodity by high frequency heating.

### Background Art

An electronic microwave oven which heats a food commodity by high frequency waves (microwaves) has been widely popularized. Generally, with the existing electronic oven, cooking is carried out by an emission of high frequency waves into a heating chamber in accordance with the food commodity to be heated. This kind of electronic oven may be used for the purpose of thawing a food commodity which has been frozen.

In the case of the conventional electronic oven, however, when heating the frozen commodity, as heating is carried out simply by an emission of a high frequency waves, a problem has existed wherein a large unevenness in a heating temperature occurs depending on the size and the configuration of the food commodity, meaning that a uniform thawing cannot be carried out. For example, in the event that the configuration of the food commodity includes a corner, the corner is thawed first while another portion remains frozen, resulting in a portion which is thawed and a portion which remains frozen. In the event that this condition occurs, a large quantity of high frequency waves is absorbed first by the thawed portion meaning that, in the event that the high frequency heating is continued, the temperature difference between the corner and the other portion becomes increasingly larger.
Also, particularly in the case of a large food commodity, there is an increased tendency with high frequency heating for the surface of the food commodity to be thawed while the inside remains frozen. At this point, it has happened that, in the event that high frequency heating is carried out for a long time in order to thaw the inside of the food commodity, the temperature difference between the surface and the inside of the food commodity increases, with the result that the surface of the food commodity has reached an overheated condition and has been cooked. Furthermore, although an electronic oven has been disclosed in Patent Document 1 wherein, after a magnetron is driven and the food commodity is high frequency heated, a cooling fan device is driven to supply air, while the air supply has a notable effect on a temperature uniformity with regard to the surface of the food commodity, it does not go so far as to eliminate a heating unevenness with regard to the inside of the food commodity.

Patent Document 1: JP-A-9-101035

### Disclosure of the Invention

### Problems that the Invention is to Solve

The invention has been made in view of the existing circumstances, and an object of the invention is to provide a thawing method which is capable of thawing a frozen commodity, in a short time, from the inside with no unevenness.

### Means for Solving the Problem

The thawing method of the invention is a thawing method by which a frozen commodity is thawed by means of high frequency heating comprising: a first high frequency heating step in which the frozen commodity is high frequency heated to the vicinity of a melting temperature; a temperature detection step which measures the temperature of the frozen commodity during the first high frequency heating step and detects that the measured temperature has reached the melting temperature; a steam supplying step which starts a steam supply when the melting temperature is detected in the temperature detection step, thus forming a film of dew condensation on the surface of the frozen commodity; and a second high frequency heating step in which the frozen commodity is high frequency heated after the start of the steam supplying step. By means of this configuration, the frozen commodity can be heated from the inside, in a short time, in the first high frequency heating step. Also, the frozen commodity, over the whole surface of which a film of dew condensation has been formed by the steam supply step, is high frequency heated once more in the second high frequency heating step, whereby the frozen commodity can be thawed from the whole surface with no unevenness. Additionally, as the film of dew condensation is formed over the whole surface of the frozen commodity, the frost adhering to the surface of the frozen commodity can be removed.

Also, the thawing method of the invention includes a weight evaluation step which evaluates the weight of the frozen commodity based on a temperature increase rate of the frozen commodity measured in the temperature detection step, wherein the heating time of the first high frequency heating step is set in accordance with the weight evaluation result from the weight evaluation step. By means of this configuration, the frozen commodity can be high frequency heated for a time appropriate to the weight of the frozen commodity, thereby preventing an overheating and an insufficient thawing.

Also, the thawing method of the invention includes a weight evaluation step which evaluates the weight of the frozen commodity based on a temperature increase rate of the frozen commodity measured in the temperature detection step, wherein the steam supplying time of the steam supplying step is set in accordance with the weight evaluation result from the weight evaluation step. By means of this configuration, as it is possible to supply an amount of steam appropriate to the weight of the frozen commodity to the inside of the heating chamber, meaning that no excess steam remains inside the heating chamber, it is possible to prevent condensation, and it is also possible to prevent an adherence of excess moisture to the frozen commodity.

Also, the thawing method of the invention includes a steam exhaust step which reduces an amount of steam inside a heating chamber, in which the frozen commodity is placed, after the steam supplying step. By means of this configuration, as the amount of steam inside the heating chamber is reduced even in the event that an excess of steam remains inside the heating chamber, condensation can be prevented, and the adherence of excess moisture to the frozen commodity can also be prevented.

Furthermore, in the thawing method of the invention, the temperature detection step, while scanning an infrared ray sensor which simultaneously measures a plurality of points, detects that the average value of the surface temperature of the measured frozen commodity has reached the melting temperature. By means of this configuration, the accuracy of the temperature detection can be increased.

### Advantage of the Invention

According to the invention, it is possible to thaw a frozen commodity, in a short time, from the inside with no unevenness.

### Brief Description of the Drawings

[Fig. 1] Fig. 1 is a front view showing an opening and closing door of a heating cooking apparatus in an opened condition, to illustrate one embodiment of the invention;
[Fig. 2] Fig. 2 is a control block diagram of the heating cooking apparatus;
[Fig. 3] Fig. 3 is a front view showing an example of a key arrangement of an operating panel;
[Fig. 4] Fig. 4 is an illustration representing a basic principle of the steam generation of the heating cooking apparatus;
[Fig. 5] Fig. 5A is an external view (top surface) of a heating block, while Fig. 5B is an external view (rear surface) of the heating block;
[Fig. 6] Fig. 6 is a schematic perspective view of a rear corner of a heating chamber seen from the outside;
[Fig. 7] Fig. 7 is an illustration of a configuration example of a damper provided in a duct;
[Fig. 8] Fig. 8 is an illustration of another configuration example of the damper provided in the duct;
[Fig. 9] Fig. 9 is a flowchart which illustrates a thawing method according to the embodiment;
[Fig. 10] Fig. 10 is a time chart which illustrates the thawing method according to the embodiment;
[Fig. 11] Fig. 11A is a perspective view showing a condition of a temperature measurement of a heated object by a scanning of an infrared sensor, while Fig. 11B is a graph showing a result of the temperature measurement;
[Fig. 12] Fig. 12 is a graph showing a temperature distribution of an L line position in Fig. 11B when a scan by an infrared sensor is carried out consecutively; and
[Fig. 13] Fig. 13 is a graph showing a relationship between a heating time and a measured temperature depending on a difference in quantity.

### Description of Reference Numerals and Signs

- 1: Exhaust opening
- 2: Air supply opening
- 6: Cooling fan
- 11: Heating chamber
- 13: Magnetron
- 15: Steam generator
- 17: Heater means
- 27: Water supply tank
- 32: Heated object temperature sensor
- 33: Circulation fan
- 35: Convection heater
- 45: Heating block
- 45a: Heating surface
- 46: Support plate
- 46a: Opening
- 47: Heating cooking apparatus casing bottom
- 47a: Opening
- 48: Vaporization tray
- 48a: Water storage depression
- 53: Sheathed heater
- 61: Heating block main body
- 62: Rib
- 62a: Inner surface
- 69: Water supply means
- 74: Intake pipe
- 75: Nozzle
- 76: Feed connecting port
- 77: Water pump
- 78: Discharge nozzle
- 79: Water supplying pump
- 100: Heating cooking apparatus

### Best Mode for Carrying Out the Invention

Although the invention relates to a method of thawing a frozen commodity by means of high frequency heating, in this embodiment, an example of thawing a frozen commodity using a heating cooking apparatus will be described.

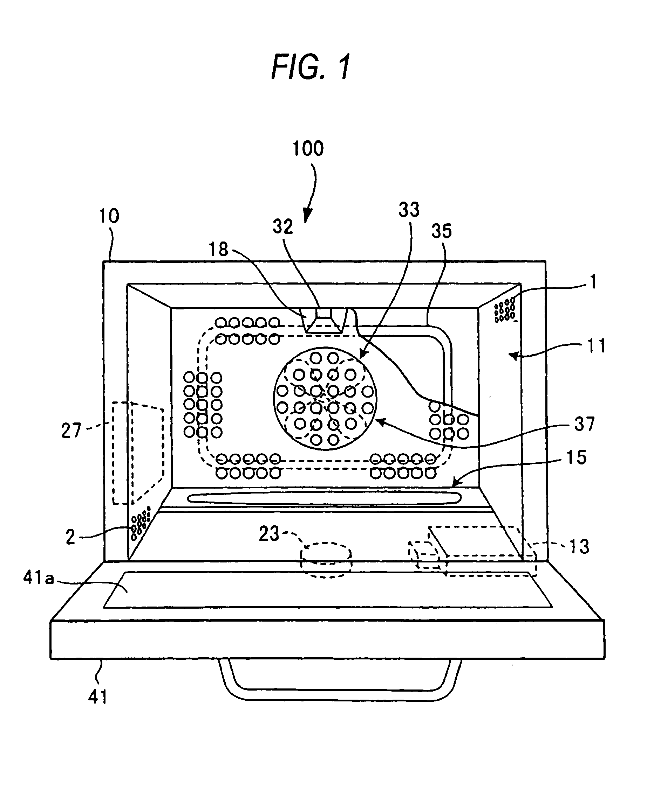

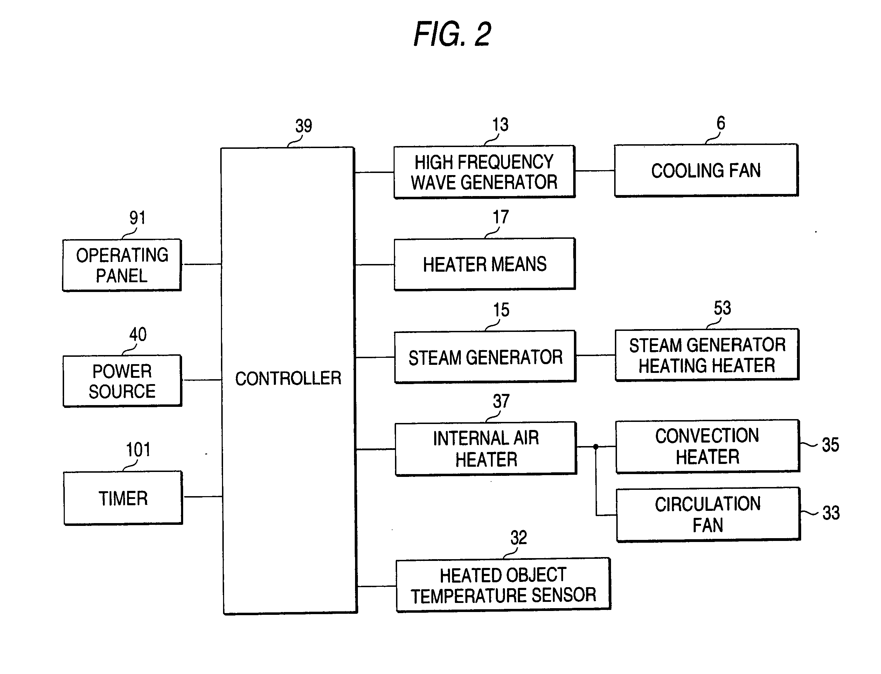

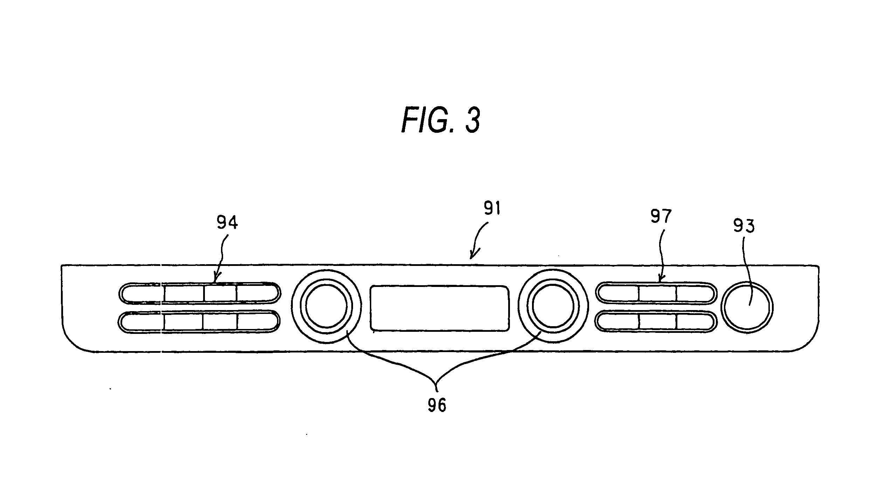

Fig. 1 is a front view showing an opening and closing door of the heating cooking apparatus in an opened condition, to illustrate one embodiment of the invention, Fig. 2 is a control block diagram of the heating cooking apparatus, and Fig. 3 is a front view showing an example of a key arrangement of an operating panel.

First, a configuration of a heating cooking apparatus 100 will be described. As shown in Fig. 1, the heating cooking apparatus 100 includes, as basic components, a magnetron 13 which generates a high frequency wave (microwave), a steam generator 15 which generates steam (steam) inside a heating chamber 11, and an operating panel 91 (refer to Fig. 3) for the purpose of starting a thawing step of a frozen commodity.

The high frequency waves from the magnetron 13 are dispersed around the whole of the heating chamber 11 by a rotary driven electrical wave agitating antenna 23. Also, the configuration is such that water is supplied to the steam generator 15 from a water supply tank 27, which is provided in a side of the heating chamber 11.

The steam generator 15 is configured in such a way as to generate a steam at the rear of the bottom inside the heating chamber 11. A heated object temperature sensor 32, such as an infrared ray sensor, is attached to the rear wall of the heating chamber 11, wherein the temperature of a heated object (frozen commodity) is measured via a detecting hole 18 which is provided in a wall of the heating chamber 11.

The heating chamber 11 is formed inside a main body casing 10, which is a front-opening box shape, wherein the opening and closing door 41, which is equipped with a translucent window 41a, and which opens and closes an aperture for removing the heated object, is attached to the front of the main body casing 10 in such a way as to be able to open and close.

Also, an air supply opening 2 is provided at the top of one side wall of the heating chamber 11, while an exhaust opening 1 is provided at the bottom of the other side wall. The air supply opening 2 and the exhaust opening 1 are openings for the purpose of carrying out the supply and exhaust of air between the outside of the heating chamber 11 and the inside of the heating chamber 11, being formed as a large quantity of punch holes. The positions in which the air supply opening and the exhaust opening are provided are not limited to those described heretofore. That is, for example, it is acceptable for the air supply opening and the exhaust opening to be provided at either the top or bottom of a side wall, and it is also acceptable for the air supply opening and the exhaust opening to be provided in the same side wall.

Also, an internal air heater 37, which comprises a circulation fan 33, which agitates and circulates the air inside the heating chamber 11, and a convection heater 35, which heats the air which circulates inside the heating chamber 11, is attached in the heating cooking apparatus 100 of this embodiment. Furthermore, heater means 17 (refer to Fig. 2), which comprises a mica heater, sheathed heater or the like, is provided in a wall, such as the top or a side, inside the heating chamber 11. An operation of each of the parts is carried out according to a control instruction from a controller 39, which is equipped with a microprocessor (refer to Fig. 2).

Also, a start key 93, which instructs a start of heating (thawing), is provided on the operating panel 91 which, shown as one example in Fig. 3, is provided on the opening and closing door 41. Knobs 96, which are used to set a heating temperature and a heating time and the like, are also provided on the operating panel 91. When carrying out thawing of a food item, the configuration is such that, after operating a "thaw" key, which is provided as one of two cooking menu keys 94 and 97, the start is instructed via the start key 93.

The controller 39, being supplied with power from a power source 40 which is connected to a commercial power source, controls a distribution of power to each of the magnetron 13, the heater means 17, the steam generator 15 etc. so that a heating power thereof does not exceed a permissible power value. Also, the controller 39 time controls each part by means of a timer 101.

The magnetron 13 is disposed in a space in the bottom of the heating chamber 11. Also, the antenna 23 is provided in a position in the approximate center of the bottom of the heating chamber 11, in which it receives the high frequency waves generated by the magnetron. The magnetron 13 and the antenna 23 can be provided not only in the bottom of the heating chamber 11, but also in another surface of the heating chamber 11. A configuration comprising a turntable in place of the antenna 23 is also acceptable.

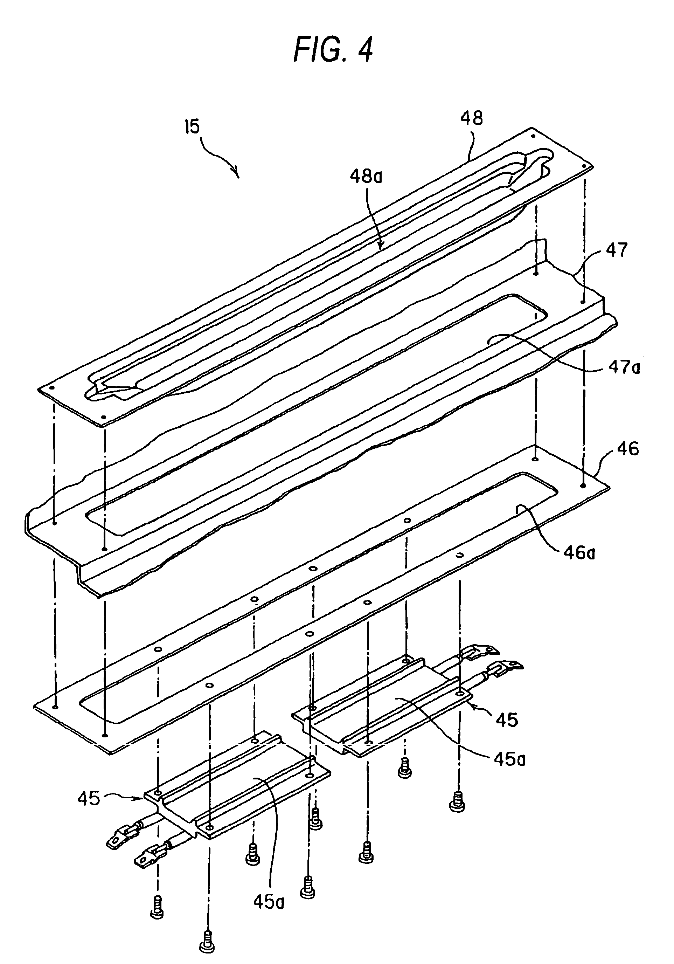

Next, a description will be given of the steam generator 15, with reference to Fig. 4. An exploded perspective view of the steam generator 15 is shown in Fig. 4.

The steam generator 15 includes a vaporization tray 48, which is of an elongated configuration and includes a water storage depression 48a in a top surface, and heating blocks 45, to be described hereafter, for the purpose of heating the vaporization tray 48, wherein the vaporization tray 48 and the heating blocks 45 are affixed to a casing bottom 47 of the heating cooking apparatus 100. Specifically, the two heating blocks 45 are temporarily screwed to a support plate 46, which includes an opening 46a which exposes a heating surface 45a, and affixed to the rear of the casing bottom 47. Meanwhile, wherein an opening 47a is formed in the frame bottom 47 to contain a projection of the water storage depression 48a of the vaporization tray 48, the vaporization tray 48 is affixed by means of projecting the water storage depression 48a downwards through the opening 47a. Also, the support plate 46 to which the heating blocks 45 are attached is affixed to the rear of the frame bottom 47 from below. By this means, the bottom of the vaporization tray 48 comes into contact with the heating surfaces 45a of the heating blocks 45, thus enabling transmission of a heat emitted by the heating blocks 45 to the vaporization tray 48. It is preferable that the support plate 46 and the vaporization tray 48 are formed of a metal material with a high heat conductivity, such as aluminum.

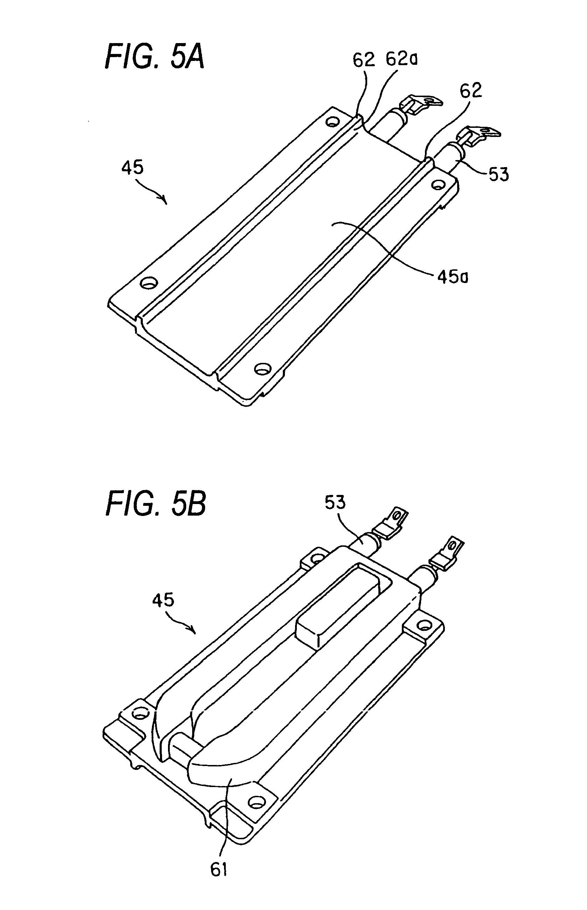

Fig. 5 shows an external perspective view of a heating block. Fig. 5(a) is a top surface while Fig. 5(b) is a rear surface.

The heating block 45 is a lightweight, highly heat conductive aluminum die cast. The heating block 45 comprises a U-shaped sheathed heater 53 embedded inside a main body 61 as a heater which heats the steam generating portion, wherein two ribs 62 protrude in the vicinity of the sides of the top surface, parallel with the straight portion of the sheathed heater 53, along the whole of the longitudinal direction of the main body 61, and opposing inside surfaces 62a of the ribs 62 have a slanting curved surface which matches the curved surface of the bottom corners of the vaporization tray 48. The curved surface configuration increases the air tightness with the vaporization tray 48, thus improving the heat transmission. The heating block 45 includes a screw hole in four corners, wherein the four corners are screwed so that the ribs 62 are in contact with the inside of the opening 46a of the plate-like member 46. In this embodiment, the two heating blocks 45 are provided, through the plate-like member 46, in the proximity of the center of the vaporization tray 48. The configuration is not limited to the one heretofore described, as it is acceptable to provide one, or three or more, heating blocks. A configuration is also acceptable wherein heating means such as a sheathed heater is disposed along a longitudinal direction on the bottom of the vaporization tray 48.

As the heating block 45 is formed of a highly heat conductive aluminum die cast, the heat from the sheathed heater 53 can be transmitted at a high efficiency to the water storage depression 45a. A configuration and attachment position of the sheathed heater 53 and the like can be changed as appropriate in response to a necessary amount of heating, an installation space inside the casing of the heating cooking apparatus 100, and the like. It is acceptable that the sheathed heater 53 is another kind of heater, such as a wire heater or a ceramic heater.

The configuration of the steam generator 15 is such that steam is supplied from the bottom of the heating chamber 11 and the steam is efficiently dispersed inside the heating chamber 11. Also, even in the event that dirt adheres to the vaporization tray 48, it can be easily removed. That is, although the calcium, magnesium, chloride compounds and the like contained in the moisture may be concentrated, deposited and attached to the bottom of the water storage depression 45a during the steam generating step, as the water storage depression 45a is exposed inside the heating chamber 11, this kind of dirt can be easily cleaned off by wiping the water storage depression 45a with a cloth or the like.

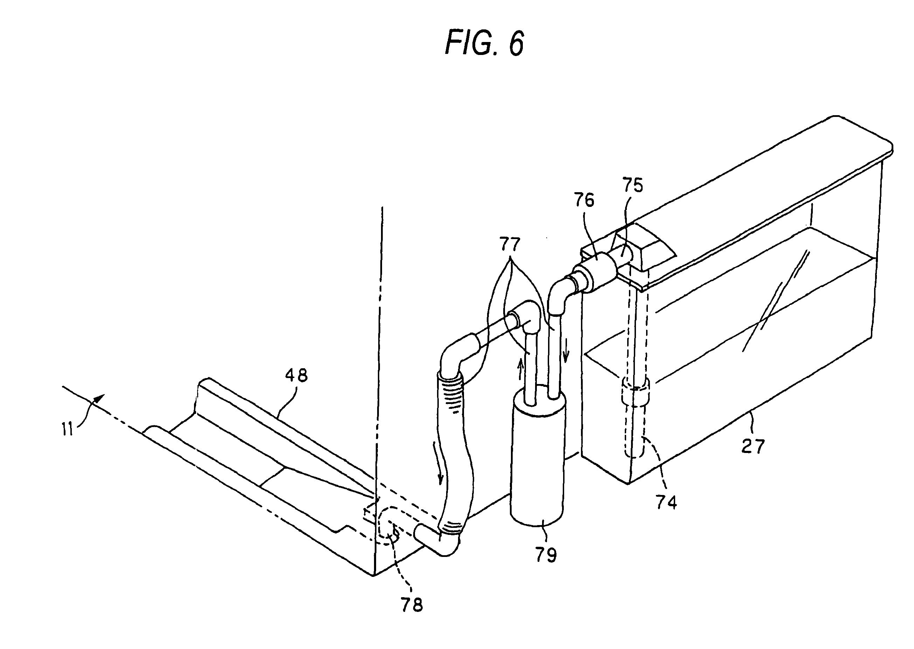

At this point, a water supply route from the water supply tank 27 shown in Fig. 1 to the steam generator 15 will be described with reference to Fig. 6. Fig. 6 is a schematic perspective view of a rear corner of the heating chamber 11 seen from the outside.
The water supply tank 27 is one which enables a supply of water to the vaporization tray 48 by an attachable and removable insertion of a nozzle 75, which is connected to an intake pipe 74, into a feed connecting port 76 affixed on the heating cooking apparatus 100 side, wherein the water is stored inside a transparent casing which enables a visual checking of a water level.
A water supplying pump 79 is driven in accordance with an instruction from the controller 39 (refer to Fig. 2) to suck up the water from the water supply tank 27 through the feed connecting port 76, thereby feeding, via a water pump 77, a prescribed amount of water to the vaporization tray 48 from a discharge nozzle 78.

With the water from the water supply tank 27 having been supplied to the vaporization tray 48, the bottom of the vaporization tray 48 is heated by an emission of heat from the sheathed heater 53 of the heating block 45, whereupon the steam generator 15 steams the water inside the vaporization tray 48.

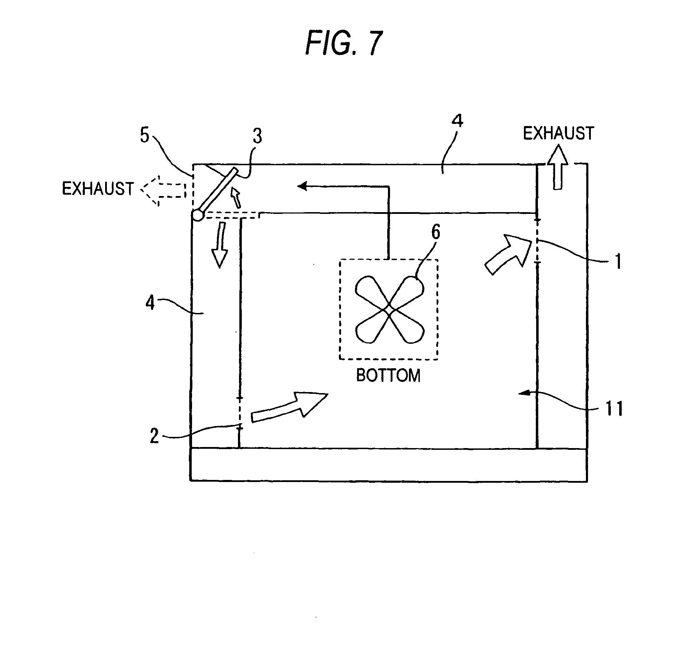

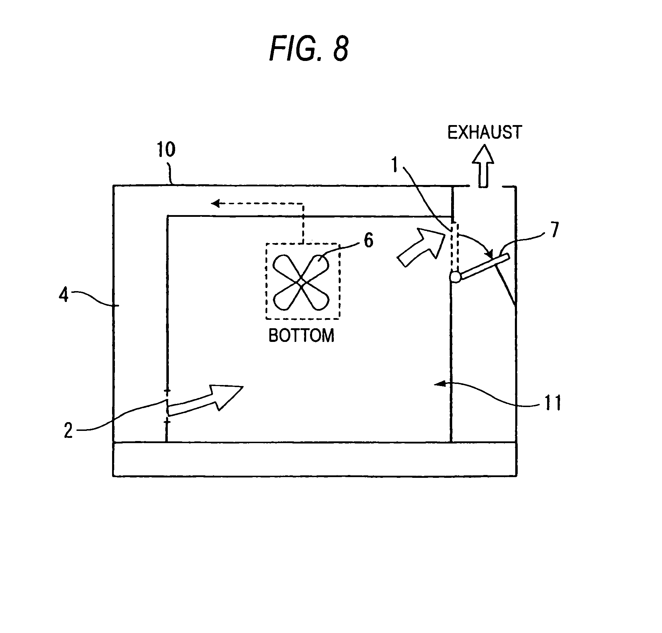

Next, a description will be given of a configuration wherein a cooling air is supplied to the inside of the heating chamber 11 for the purpose of efficiently exhausting the steam inside the heating chamber 11.
Electrical parts such as a magnetron and a circuit board are installed on the bottom of the heating cooking apparatus 100, wherein the air from a magnetron cooling fan 6 is blown against each electrical part, thereby cooling it. At this time, the supply of the cooling air from the bottom of the heating cooking apparatus 100 to the inside of the heating chamber 11 is made possible through ducts 4 and 5 provided in a perimeter of the heating chamber 11. For example, as shown in Fig. 7, a damper 3 is provided between the ducts 4 and 5, wherein the cooling air is supplied to the heating chamber 11, or exhausted to the outside from the exhaust opening 6, by means of a displacement of the damper 3. A configuration is also acceptable wherein a shutter which blocks a passage between the ducts 4 and 5 is simply provided in place of a damper. Furthermore, a configuration is also acceptable wherein, as shown in Fig. 8, a damper 7, which blocks the exhaust opening 1 of the heating chamber 11, is provided.
In this case, it is acceptable to provide a separate, dedicated cooling fan, as well as a magnetron cooling fan, as the cooling fan 6, wherein air is supplied to the heating chamber 11 at an optional timing, regardless of an existence or non-existence of the generation of the high frequency waves. According to the configuration, an excess steam which remains inside the heating chamber 11 can be effectively exhausted, and an amount (density) of steam inside the heating chamber 11 can be reduced. Furthermore, by causing the circulation fan 33 to rotate, the steam exhaust efficiency can be increased.

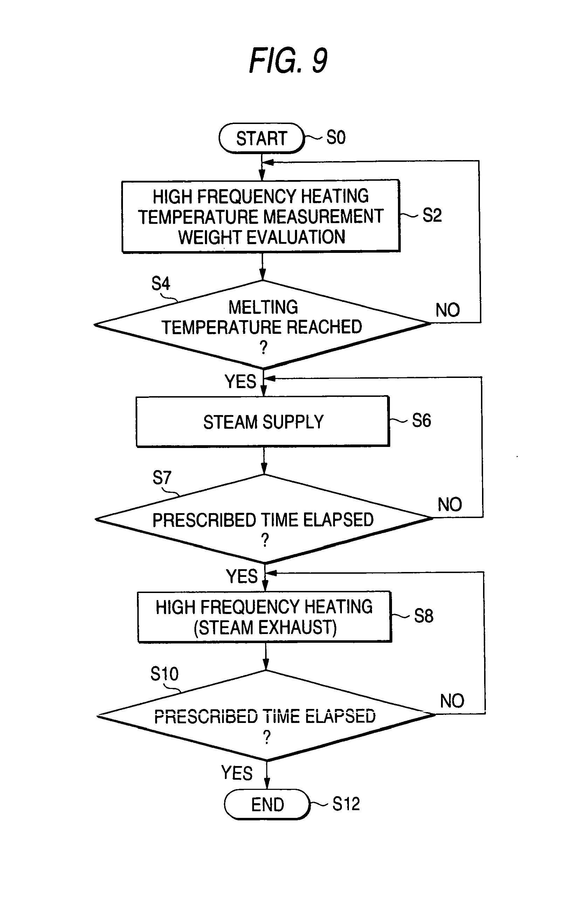

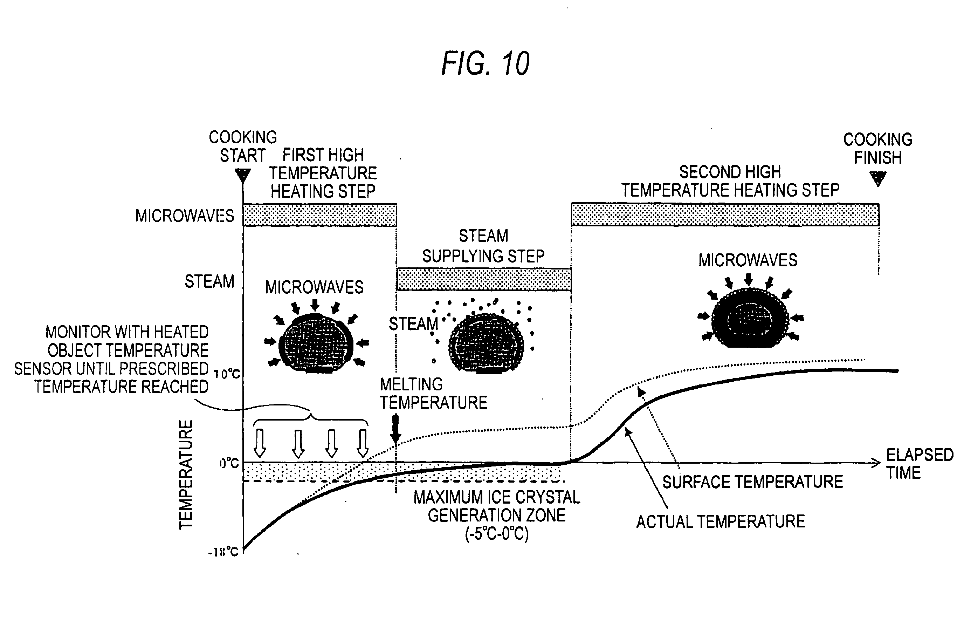

Next, one example of an implementation of the thawing method according to the invention, using the heating cooking apparatus 100, will be described with reference to Figs. 9 and 10. Fig. 9 is a flowchart which illustrates the thawing method of this embodiment, while Fig. 10 is an explanatory diagram which functionally illustrates the thawing method of this embodiment, wherein an example of a change in temperature in the case of thawing 300g of -18°C frozen sliced meat (hereafter referred to as "frozen commodity M") is shown.

First, the frozen commodity M which is to be thawed is placed onto a plate or the like, and put into the heating chamber 11, whereupon the opening and closing door 41 is closed. Then, after putting the "thaw" key on the operating panel 91 on, the start key is put on (step S0).

When the start key is put on, as well as the magnetron 13 generating high frequency waves (microwaves), the heated object temperature sensor 32 starts measuring the temperature of the frozen commodity M (step S2). Also, in step S2, the weight of the frozen commodity M is evaluated. The details of the temperature measurement and the weight evaluation at this time will be described hereafter. Furthermore, based on a result of the weight evaluation carried out in step S2, a time of the steam supply carried out in step S6 and a time of the high frequency heating carried out in step S8 are set.

By means of the high frequency heating in step S2, the frozen commodity M is heated from the inside. As, in general, high frequency waves have a low absorption and a large depth of penetration with respect to ice, when the frozen commodity M is high frequency heated, a heating effect works not only on the surface of the frozen commodity M but also on the inside, thus having a benefit of accelerating the thawing. Then, by continuing the high frequency heating, the temperature of the frozen commodity M gradually rises, wherein one part of the surface of the frozen commodity M, which has been in a frozen condition, begins to melt.

Also, it is determined whether or not the surface temperature of the frozen commodity M which is measured in step S2 has reached a prescribed value (step S4). In the event that the surface temperature of the frozen commodity M has reached the prescribed temperature (a melting temperature to be described hereafter), as well as the high temperature heating being stopped, the supply of steam to the inside of the heating chamber 11 by the steam generator 15 is started (step S6). While the high temperature heating is being carried out, the heated object temperature sensor 32 monitors the temperature of the frozen commodity M, finishing the temperature measurement when the steam supply is started.

The melting temperature which determines the timing of the start of the steam supply is the temperature at which one part of the surface of the frozen commodity M begins to melt, and is set at a predetermined value based on an experiment. The melting temperature is the surface temperature at a point when the temperature of the inside of the food item reaches the order of -5 to 0°C (maximum ice crystal generation zone). For example, in a case of an example shown in Fig. 8, when one part of the surface of the frozen commodity M begins to melt, the measured temperature according to the heated object temperature sensor 32 is 3 to 7°C, while the actual temperature of the frozen commodity M (an average temperature of the frozen commodity M from the surface through the whole of the inside) is -5 to 0°C. That is, in this case, the melting temperature which determines the timing of the start of the steam supply is 3 to 7°C. The surface temperature and the actual temperature of the frozen commodity M shown in Fig. 8 are based on the result of a previously conducted experiment. In the case of the example shown in Fig. 8, the steam supply is started approximately two minutes after the start of the high frequency heating.

In step S6, the high frequency heating is stopped along with the steam supply being started. As a result, as there is no concentrated absorption of the high frequency waves by the part of the frozen commodity M which has started to melt, uneven thawing can be reliably prevented. Also, while the steam is being supplied, a localized temperature unevenness of the frozen commodity M is reduced by the heat transmission. Furthermore, an amount of power consumption during the steam supply can be suppressed. It is also acceptable that the steam supply and the high frequency heating are carried out in parallel. In this case, in order to prevent uneven thawing, it is preferable that the high frequency heating is carried out at a low power. By this means, a reduction in a temperature increase rate due to condensation can be suppressed, wherein swift thawing can be carried out by an effective use of a cooking time. As the amount of steam inside the heating chamber 11 increases in step S6, it is easy for condensation to form on the low temperature surface of the frozen commodity M. Then, after a certain time has elapsed from the start of the steam supply, the whole of the surface of the frozen commodity M is covered in a film of condensation. When this kind of condition occurs, the steam supply is stopped. As the time until the surface of the frozen commodity is covered in a film of condensation varies depending on a volume and a heat capacity predicted from the weight of the frozen commodity, as well as an initial temperature of the frozen commodity and the like, it is preferable that the steam supply time is adjusted (set) beforehand in accordance with the weight and the like of the frozen commodity. The controller 39 sets a control timing for each part heretofore described, in accordance with the elapsed time of the heating time and the like measured by the timer 101. After the steam supply is started in step S6, it is determined whether or not a preset prescribed time has elapsed (step S7). In the event that the prescribed time has elapsed, the process moves on to step S8, while in the event that it has not elapsed, the steam supply is continued. Also, in the case of the example shown in Fig. 8, the steam supply time is approximately one minute.

Next, after the film of condensation has been formed on the whole of the surface of the frozen commodity M, as well as the high frequency heating being restarted, the steam remaining inside the heating chamber 11 is exhausted (step S8). As the whole of the frozen commodity M is covered in the film of condensation, in the event that the high frequency waves are applied to the frozen commodity M in this condition, the absorption rate of the high frequency waves becomes uniform over the whole of the frozen commodity. Consequently, by heating the frozen commodity M, which is covered in the film of condensation, at a high frequency, as well as enabling uniform heating with no unevenness, it is possible to remove a frost from the surface of the frozen commodity M. It is preferable that the power of the high frequency waves at this time is set lower than in the case of step S2, thereby suppressing an abrupt heating. In step S6, however, after the steam is supplied, the steam remains inside the heating chamber 11. The steam is efficiently exhausted to the outside of the heating chamber 11 by using the exhaust opening 1 and the air supply opening 2. That is, together with the air outside the heating chamber 11 being drawn in through the air supply opening 2, the air inside the heating chamber 11 is exhausted through the exhaust opening 1. By this means, the amount (density) of steam included in the air inside the heating chamber 11 can be reduced wherein, as no excess steam remains inside the heating chamber 11, an occurrence of unnecessary condensation on the wall and the like of the heating chamber 11 can be prevented, and an adherence of excess moisture to the frozen commodity M can also be prevented. By this means, it is possible to fill the inside of the heating chamber 11 with steam only when the condensation is necessary. Also, by setting in advance an appropriate steam supply time based on the heretofore described weight evaluation result in step S2, only the necessary amount of steam is supplied, meaning that the steam exhaust step can be omitted.

Next, the controller 39, with reference to the time measured by the timer 101, determines whether or not the high frequency heating time set in step S2 has elapsed (step S10). In the event that it is determined in step S10 that the high frequency heating time has elapsed, the high frequency heating and the like is finished, and the thawing step is finished (step S12). Whereas an actual temperature (a completion temperature) of the frozen commodity M at the time of finishing the thawing step is, for example in the case of the example shown in Fig. 8, in the order of 0 to 10°C, the surface temperature (the result of the measurement by the heated object temperature sensor 32) of the frozen commodity M at the time is approximately 15°C. Although the correlation between the surface temperature and the actual temperature of the frozen commodity differs depending on the type, weight, configuration and the like (whether it is a lump or a thinly sliced article etc.) of the frozen commodity, the actual temperature can be known from the surface temperature based on the result of the experiment conducted in advance.

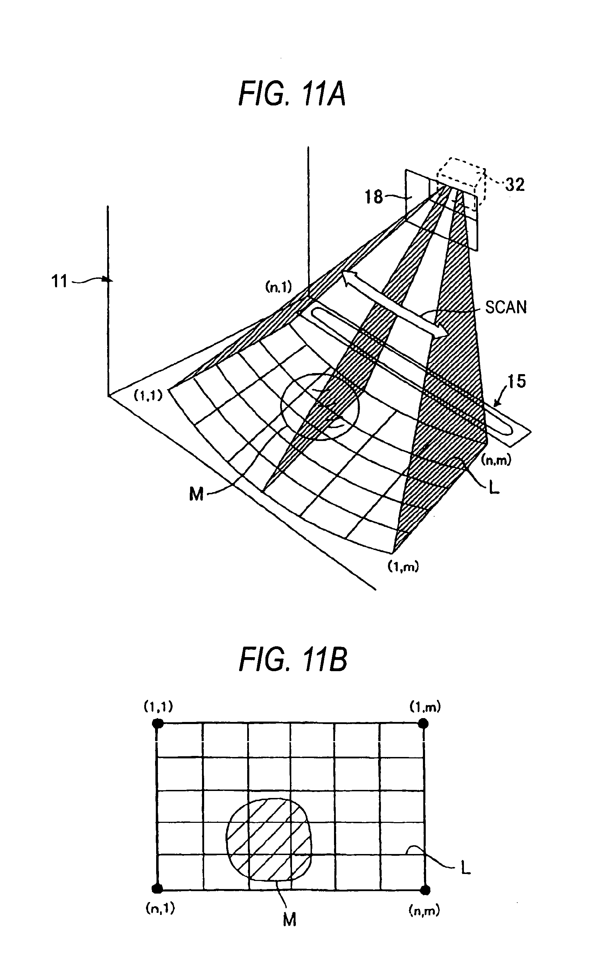

With reference to Fig. 11, a description will now be given of the measurement of the temperature of the frozen commodity M by the heated object temperature sensor 32. Although the frozen commodity M is placed inside the heating chamber 11, it is unclear in what position on the bottom of the heating chamber 11 the frozen commodity is placed at the start of the thawing. For this reason, the position of the frozen commodity M is calculated from a temperature distribution inside the heating chamber 11 obtained from the heated object temperature sensor 32. That is, as shown in Fig. 11(a), the heated object temperature sensor 32, while simultaneously detecting the temperature of a plurality of points (n points) at one time, scans in the direction of the arrow in the drawing by oscillating the heated object temperature sensor 32 itself, thereby detecting the temperature at a plurality of measurement points (m points in the scanning direction) inside the heating chamber 11. Consequently, in one scan, temperature detection is possible at the nxm measuring points shown in Fig. 11 (b).

As can be clearly seen from the temperature distribution in the heating chamber 11 measured by one scan of the heated object temperature sensor 32 shown in Fig. 11(b), normally, the temperature of the place in which the frozen commodity M exists is detected to be a different temperature to that of the other areas, thus enabling the position of the frozen commodity M inside the heating chamber 11 to be identified. That is, when temperature measurement is started, as the temperature in one particular area is detected to be low in comparison with the temperature (normal temperature) of the bottom of the heating chamber 11, the position of the frozen commodity M can be identified.

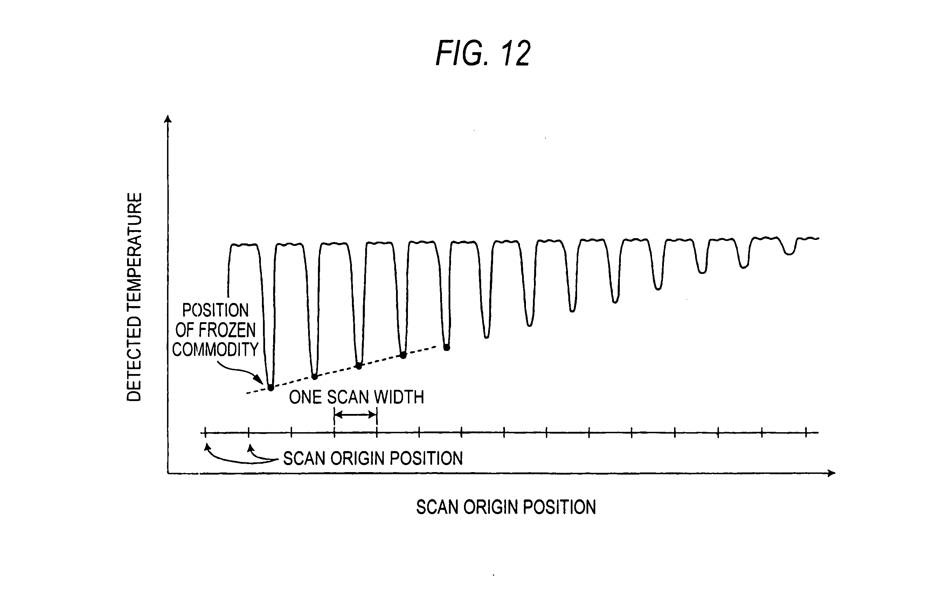

Fig. 12 shows the temperature distribution of an L line position in Fig. 11(b) when a scan by the heated object temperature sensor 32 is carried out consecutively a plurality of times. In Fig. 12, a temperature reduction peak position of the temperature distribution when the temperature particularly changes within the range of one scan corresponds to the position of the frozen commodity M on the L line in Fig. 11 (b). Consequently, the position of the frozen commodity M in the heating chamber 11 can be calculated from the peak position of the temperature distribution. Then, by tracing the temperature corresponding to the position of the frozen commodity M back to the initial heating time or the temperature measurement starting time, the initial temperature of the frozen commodity M is determined.

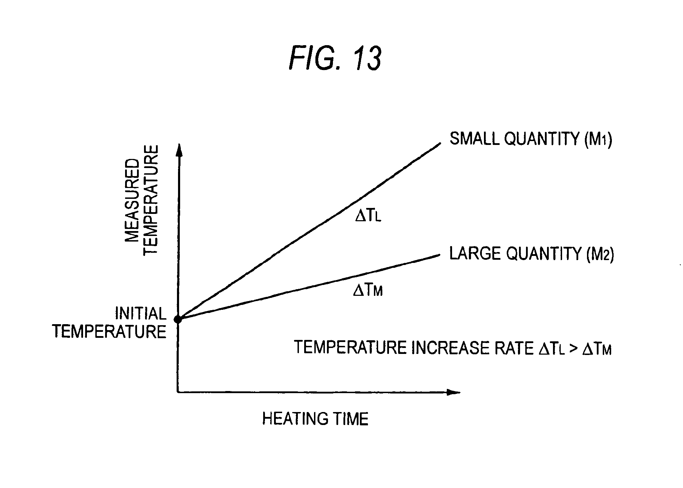

When the initial temperature has been determined, a temperature increase rate ΔT of the frozen commodity M is calculated from the gradient of the line (the dotted line in Fig. 12) which connects each peak of the temperature distribution curve in Fig. 12. A quantity of the frozen commodity M is estimated from the temperature increase rate ΔT. That is, as shown in Fig. 13, the quantity is estimated by using the fact that when heating two frozen commodities M1 and M2 of a different weight under the same conditions at the same initial temperature, the temperature increase rate ΔT differs according to the weight. For example, whereas in a case of heating the frozen commodity M1, which has a small quantity, the temperature increase rate is ΔTL, in a case of heating the frozen commodity M2, which has a large quantity, the temperature increase rate is ΔTM, which is smaller than ΔTL.

In this way, when the determining of the initial temperature of the frozen commodity M, and the estimation of the quantity of the frozen commodity M from temperature increase rate ΔT, have been completed, the high frequency heating time is set in accordance with the calculated temperature increase rate ΔT. For example, it is calculated as K1/ΔT (K1 is a constant). Furthermore, at this point, the setting of the maximum heating time corresponding to the quantity of the frozen commodity is also carried out. In the case of a subsequent heating step, when the total heating time exceeds the maximum heating time, control is carried out whereby the heating step is compulsorily finished. By this means, an overheating is prevented and the safety of the apparatus can be maintained.

In this way, when measuring the surface temperature of the frozen commodity M in step S2, the accuracy of the temperature measurement is increased by scanning the heated object temperature sensor 32, which simultaneously measures a plurality of points, and calculating the average value for the area which corresponds to the frozen commodity M.

Although, thus far, a description has been given of the case in which each step (the high frequency heating in step S2 and S8, the steam supply in step S6) is started or finished in accordance with the fact that the prescribed time based on the weight of the frozen commodity has elapsed, it is also acceptable to determine the timing of each process by another method. For example, it is acceptable that the timing of each process is the time, wherein the surface temperature of the frozen commodity M is constantly measured, when the surface temperature reaches the prescribed value, or, wherein a table is prepared in advance to show the type, weight, configuration and the like of the frozen commodity, and the surface temperature change sample data obtained by changing the time for which each process is conducted, the time when the prescribed time based on the table has elapsed. Furthermore, it is also acceptable to determine the timing of each process by constantly measuring the surface temperature of the frozen commodity, and comparing the actual value with the temperature shown in the aforementioned table.

As has been heretofore described, according to the thawing method of this embodiment, the frozen commodity can be swiftly thawed from the inside by high frequency waves. Also, the frozen commodity, over the whole surface of which a film of condensation has been formed by the steam supply, is high frequency heated once more, whereby the frozen commodity can be uniformly thawed with no unevenness. Additionally, as the film condensation is formed over the whole surface of the frozen commodity, the frost adhering to the surface of the frozen commodity can be melted and removed. Furthermore, in the thawing step, it is possible to gradually thaw from the inside without abruptly raising the surface temperature of the frozen commodity.

Also, as the weight is evaluated based on the result of the temperature measurement using the heated object temperature sensor 32, the frozen commodity can be high frequency heated for a time appropriate to the weight of the frozen commodity, thereby preventing an overheating and an insufficient thawing, and enabling the carrying out of an extremely efficient thawing step.

### (Second Embodiment)

Although the thawing method of this embodiment is approximately identical to the thawing method described in the first embodiment, the timing of the start of the steam supply shown in Fig. 9 is different. In this embodiment, regardless of whether or not the measured surface temperature of the frozen commodity M has reached the melting temperature, in the event that the prescribed time set in accordance with the weight evaluation result in step S2 has elapsed, the steam supply is started. That is, even in the case where it is determined that the melting temperature has been reached in step S4, in the event that the aforementioned prescribed time has not elapsed, the high frequency heating is continued without the steam supply being started. On the contrary, even in the case where it is not determined that the melting temperature has been reached in step S4, in the event that the aforementioned prescribed time has elapsed, the steam supply is started while the high frequency heating is stopped.

By this means, for example, in the case of thawing a frozen commodity which has a projection and the like, even when the average value of the surface temperature of the frozen commodity is measured to be higher than the actual value as the temperature of one part of the frozen commodity rises, the frozen commodity can be high frequency heated for an appropriate time.

Although the invention has been described in detail and with reference to a specific embodiment, it is apparent to those skilled in the art that a variety of changes and modifications can be added without departing from the spirit and scope of the invention.
The present application is based on a Japanese patent application filed on November 13, 2003, application number 2003-383421, the contents of which are included as reference herein.

### Industrial Applicability

The thawing method of the invention has a benefit of thawing the frozen commodity from the inside, with no unevenness, in a short time, thereby being useful in the case of thawing the frozen commodity by high frequency heating and in a like case.

## Claims

1. A thawing method by which a frozen commodity is thawed by means of high frequency heating comprising:
a first high frequency heating step for high frequency heating the frozen commodity to the vicinity of a melting temperature;
a temperature detection step for measuring the temperature of the frozen commodity during the first high frequency heating step and detects that the measured temperature has reached the melting temperature;
a steam supplying step for starting a steam supply when the melting temperature is detected in the temperature detection step, thus forming a film of dew condensation on the surface of the frozen commodity; and
a second high frequency heating step for high frequency heating the frozen commodity after the start of the steam supplying.

2. A thawing method according to claim 1, including
a weight evaluation step for evaluating the weight of the frozen commodity based on a temperature increase rate of the frozen commodity measured in the temperature detection step,
wherein the heating time of the first high frequency heating step is set in accordance with the weight evaluation result from the weight evaluation step.

3. A thawing method according to claim 1, including
a weight evaluation step for evaluating the weight of the frozen commodity based on a temperature increase rate of the frozen commodity measured in the temperature detection step,
wherein the steam supplying time of the steam supplying step is set in accordance with the weight evaluation result from the weight evaluation step.

4. A thawing method according to any one of claims 1 to 3, including
a steam exhaust step for reducing an amount of steam inside a heating chamber, in which the frozen commodity is placed, after the steam supplying step.

5. A thawing method according to any one of claims 1 to 4, wherein the temperature detection step, while scanning an infrared ray sensor which simultaneously measures a plurality of points, detects that the average value of the surface temperature of the measured frozen commodity has reached the melting temperature.
